# EUROPÄISCHE PATENTSCHRIFT

(11) **EP 3 544 703 B1**
(45) Veröffentlichungstag und Bekanntmachung des Hinweises auf die Patenterteilung: **10.03.2021**
(21) Anmeldenummer: 18700837.0
(22) Anmeldetag: 08.01.2018
(51) Int. Cl.: A63B 71/08, A61C 13/00, A61C 13/15

(54) **ZAHNSCHUTZVORRICHTUNG UND VERFAHREN ZU IHRER HERSTELLUNG**
TEETH PROTECTOR DEVICE AND PRODUCTION METHOD THEREOF
DISPOSITIF DE PROTECTION DENTAIRE ET SON PROCÉDÉ DE FABRICATION

(30) Priorität: 03.02.2017 DE 102017102101
(43) Veröffentlichungstag der Anmeldung: 02.10.2019
(73) Patentinhaber: Dreve Dentamid GmbH, 59423 Unna (DE)
(72) Erfinder: DREVE, Volker, 59423 Unna (DE)
(74) Vertreter: Köchling, Conrad-Joachim
(86) Internationale Anmeldenummer: PCT/DE2018/100008
(87) Internationale Veröffentlichungsnummer: WO 2018/141325

(56) Entgegenhaltungen:
- AT-U1- 7 980
- FR-A1- 2 576 798
- JP-A- H08 206 272

## Beschreibung

Die Erfindung betrifft eine Zahnschutzvorrichtung, bestehend aus einer einem bezahnten Kiefer eines Benutzers angepassten, im Querschnitt etwa U-förmigen oder rinnenförmigen Schiene aus tiefziehfähigem Kunststoff, vorzugsweise aus Ethylenvinylacetat (EVA), wobei die Schiene zwei aufeinander laminierte Kunststofffolien mit dazwischen befindlicher Einlage aufweist, die vornehmlich in einem dem Gaumen des Benutzers abgewandten mittleren Frontbereich vorgesehen ist und eine seitliche Erstreckung aufweist, die mehreren Zähnen des Benutzers entspricht sowie eine Breite aufweist, die einer Abmessung von einem etwas überdeckbaren Zahnspitzenbereich bis zum Zahnfleisch entspricht, sowie ein Verfahren zur Herstellung einer Zahnschutzvorrichtung.

Zahnschutzvorrichtungen der angegebenen Art sind im Stand der Technik bekannt. Bisher wurden solche Zahnschutzvorrichtungen als Tiefziehteile hergestellt. Hierbei wurde zum Zwecke der Herstellung zunächst eine Hohlform eines bezahnten Kiefers eines entsprechenden Patienten mit Hilfe eines Abdruckes mit Hilfe einer Abdruckmasse geformt. Diese Hohlform wurde dann dazu genutzt, diese mit einer gießfähigen aushärtbaren Masse zu befüllen, sodass dann ein Modell des bezahnten Kiefers zur Verfügung stand. Zur Anfertigung der Zahnschutzvorrichtung wurde dann auf dieses Modell eine erste Tiefziehfolie aufgelegt, erwärmt und mittels vorzugsweise Vakuum oder auch mittels Überdruck auf das Modell aufgeformt, sodass die Konturen des bezahnten Kiefers ausgeformt wurden. Nachfolgend oder gleichzeitig wurde eine weitere Tiefziehfolie aufgelegt, die praktisch eine Einlage in der Mundschutzvorrichtung bewirken sollte, sodass diese in einem bestimmten Bereich materialstärker und höher beanspruchbar ausgebildet sein konnte. Auf diese Einlage wurde eine weitere Tiefziehfolie aufgebracht. Anschließend wurde ein weiterer Tiefziehvorgang vorgenommen, sodass das Einlageteil und die zweite Tiefziehfolie ebenfalls auf dem Modell übergreifend die erste Tiefziehfolie aufgebracht werden konnte. Die so tiefgezogene Kombination der Einzelteile konnte dann nach Abkühlung abgenommen werden, sodass die fertige Zahnschutzvorrichtung zur Verfügung gestellt werden konnte.

Die herkömmliche Ausgestaltung war lediglich dazu geeignet, Zahnschutzvorrichtungen zur Verfügung zu stellen, die hinsichtlich ihrer Form, Schichtstärke, Flexibilität und dergleichen sehr eingeschränkt war, weil sowohl die Schichtdicke des Einlageteiles nicht unterschiedlich eingestellt werden konnte, aber auch aufgrund der relativen Härte des Materials der Einlage nur kleinere Bereiche des zu schützenden Kiefers bei der Zahnschutzvorrichtung mit einer entsprechenden Einlage ausgestattet werden konnten, so beispielsweise nur die Bereich von jeweils drei Zähnen rechts und links der Kiefermitte.

Solche Zahnschutzvorrichtungen werden besonders häufig zum Schutz von Sportlern eingesetzt, wobei die Zahnschutzvorrichtung mit dem darin befindlichen Einsatz dazu dient, eine Kraftverteilung von Schlägen und Stößen auf eine größere Fläche zu erreichen. Bei unterschiedlichen Sportarten werden unterschiedliche Verletzungsmuster bewirkt. Beispielsweise beim Hockeysport trifft der Schläger unter Umständen mit sehr hoher Kraft auf eine nur sehr kleine Fläche in Gegensatz zum Boxsport, bei dem der großflächige, gepolsterte Handschuh, auf eine große Fläche trifft. Daher müssen, um eine perfekte Schutzwirkung zu garantieren, die Zahnschutzvorrichtungen dem Sport angepasst werden. Dies ist mit der herkömmlichen Technik nur unzureichend möglich. Üblicherweise werden bei bisherigen Zahnschutzvorrichtungen, die im Wege des Tiefziehens hergestellt werden, Folien einer Schichtdicke von 3 mm eingesetzt. Bei diesen Tiefziehfolien handelt es sich um relativ elastische Folien, die einen hohen Tragekomfort haben. Die Einlageteile sind im Regelfall härter und demzufolge auch wesentlich schlechter im Wege des Tiefziehvorganges einzuarbeiten. Aus diesem Grunde sind die herkömmlichen Einlagen nur in einem begrenzten Bereich des Kiefers einsetzbar, vorzugsweise im vorderen Bereich von drei Zähnen rechts und links der Mitte. Eine größere Ausdehnung des Zahnschutzes ist kaum möglich und nicht üblich, weil entsprechende Verformungen im Wege des Tiefziehens für größere Einlageteile schwer realisierbar sind.

Aus der AT 7 980 U1 ist eine Zahnschutzvorrichtung bekannt, die eine Einlage in Form einer folienartige Schicht aufweist, wobei die Folie mit einer Grafik bedruckt ist. Diese Zahnschutzvorrichtung aus D1 wird nach dem Tiefziehverfahren hergestellt.

Die FR 2 576 798 A1 offenbart eine Zahnschutzvorrichtung, bestehend aus mehreren Folien, wobei die Einlage durch eine starre Folie gebildet ist, die zwischen zwei flexiblen Folien angeordnet ist. Die Folien werden in bekannter Weise durch erwärmen und mittels Überdruck auf ein Modell aufgeformt.

Ausgehend von diesem Stand der Technik liegt der Erfindung die Aufgabe zugrunde, eine Zahnschutzvorrichtung gattungsgemäßer Art zu schaffen und ebenso ein Verfahren zu deren Herstellung, wobei eine bessere Schutzwirkung erreicht werden soll, eine bessere Anpassung an unterschiedliche Sportarten erzielt werden soll und ein besserer Schutz des bezahnten Kiefers des Benutzers über eine größere Breite, also nicht nur über drei Zähne rechts und links der Mitte.

Zur Lösung dieser Aufgabe schlägt die Erfindung vor, dass die Einlage ein mittels eines 3-D-Druckers erzeugtes 3-D-Formteil aus licht- oder laserhärtendem Kunststoff ist, wobei die Schichtdicke des Formteils variiert, und dass die Einlage eine seitliche Erstreckung hat, die mehr aus einer Breite von sechs Zähnen entspricht, vorzugsweise bis zu 10 Zähnen, ganz bevorzugt der Gesamtlänge eines bezahnten Kiefers eines Benutzers, und dass die Schichtstärke der Einlage zwischen 0,5 mm und 5 mm beträgt.

Gemäß der Erfindung wird die Einlage mittels eines 3-D-Druckers erzeugt, sodass hierdurch ein 3-D-Formteil aus licht- oder laserhärtendem Kunststoff zur Verfügung gestellt ist. Diese Einlage kann zwischen die tiefziehfähigen Kunststofffolien eingebracht werden und rezessive kann der Umformvorgang vorgenommen werden, wobei es nicht erforderlich ist, das mittels des 3-D-Druckers erzeugte Formteil im Wege des Tiefziehens weiter zu verarbeiten, sondern dieses Teil wird in seiner originär hergestellten Form, Größe, Abmessung und Dicke eingebracht und nach dem Umformen der ersten tiefziehfähigen Kunststofffolie auf dem Modell auf diese Folie aufgebracht und lagerichtig positioniert, wobei dann die zweite tiefziehfähige Folie aufgebracht und tiefgezogen wird, sodass dann die komplette Zahnschutzvorrichtung zur Verfügung gestellt ist.

Als tiefziehfähige Folien werden vorzugsweise Ethylenvinylacetat-Copolymer-Folien (EVA) eingesetzt. Die Einlage, die ein mittels des 3-D-Druckers erzeugtes Formteil ist, kann dem entsprechenden Anwendungszweck sehr einfach angepasst werden, in dem die Schichtdicke des Formteiles variiert wird. Maßliche Beschränkungen sind hierbei prinzipiell nicht gegeben, weil eine Umformung des Formteiles im Wege des Tiefziehens, wie dies im Stand der Technik üblich ist, nicht erforderlich ist.

Die Ausbildung der Einlage in Form eines 3-D-Druckteiles ermöglicht es, dessen seitliche Erstreckung bis praktisch über den gesamten zu schützenden Kiefer vorzunehmen. Zudem kann die Höhenerstreckung der Einlage bis zu den Spitzen der Zähne oder auch über diese Spitzen hinaus erfolgen, wobei dann eine entsprechende Abwinklung oder Abrundung vorzusehen ist. Alles dies ist im Wege eines 3-D-Druckverfahrens einfach zu realisieren.

Die Schichtstärke wird in Abhängigkeit von der ausgeübten Sportart variiert und vorgesehen. Da die Einlage nicht nochmals durch den Tiefziehvorgang umgeformt werden muss, ist eine relativ dicke Ausbildung von bis zu 5 mm möglich. Besonders bevorzugt ist vorgesehen, dass die Einlage ein Formteil aus Acrylaten, Methacrylaten, Epoxiden, Vinylethern, Vinylestern, Styrolderivaten, Thiol-En-Systemen oder Mischungen davon ist.

Solche Materialien sind licht- bzw. laserhärtende Kunststoffe, aus denen in einem generativen Verfahren individuelle Formteile für Zahnschutzvorrichtungen hergestellt werden können.

Zudem kann bevorzugt sein, dass das Formteil Farbstoffe beinhaltet.

Die vorzugsweise bearbeiteten zuvor angeführten lichthärtenden Kunststoffe, können Farbstoffe und weitere Initiatoren beinhalten, sodass durch Einsatz von unterschiedlichen Farben, unterschiedliche Produktgenerationen kenntlich gemacht werden können.

Besonders bevorzugt ist vorgesehen, dass die Einlage aus Material mit unterschiedlicher Härte besteht.

Die im Wege des 3-D-Drucks erzeugte Einlage kann in einfacher Weise unterschiedliche Härtegerade aufweisen, wie dies der Beanspruchung entspricht. Dabei können die Härtegrade in einer einzigen Einlage variiert werden, um ein besonders hervorragendes Produkt zur Verfügung zu stellen.

Vorzugsweise ist dabei vorgesehen, dass die Einlage aus Material einer Härte von zwischen 35 und 90 Shore A besteht.

Höhenerstreckung der Einlage bis zu den Spitzen der Zähne oder auch über diese Spitzen hinaus erfolgen, wobei dann eine entsprechende Abwinklung oder Abrundung vorzusehen ist. Alles dies ist im Wege eines 3-D-Druckverfahrens einfach zu realisieren.

Auch kann vorgesehen sein, dass die Kunststofffolien zumindest teilweise opak sind.

Bei einer mindestens teilweise opaken Ausbildung der Kunststofffolien wird erreicht, dass das Einlageteil kaschiert oder teilweise oder vollständig unsichtbar wird.

Auch kann vorgesehen sein, dass die Einlage Hohlräume, Vertiefungen und/oder Lochungen aufweist.

Diese Ausgestaltung ermöglicht es, eine Zahnschutzvorrichtung in besonderer Weise auszugestalten. So ist es möglich, durch Hohlräume, Vertiefungen oder Lochungen eine Gewichtserleichterung zu erreichen. Auch kann die mechanische Elastizität der Einlage durch solche Ausgestaltungen in bestimmter Weise beeinflusst werden. Die Einlage kann solche Ausgestaltungen auch beispielsweise in Form von Gitterstrukturen aufweisen.

Vorzugsweise ist dabei vorgesehen, dass die Hohlräume, Vertiefungen und/oder Lochungen nicht vom Material der Kunststofffolien gefüllt sind.

Durch die entsprechende Ausgestaltung wird erreicht, dass die Hohlräume oder dergleichen erhalten bleiben, auch wenn die weiteren Kunststofffolien im Wege des Tiefziehens aufgebracht sind, sodass die von den entsprechenden Gestaltungen erwünschten Funktionen aufrechterhalten bleiben, auch wenn die weiteren Kunststofffolien aufgebracht sind.

Insbesondere kann auch vorgesehen sein, dass mindestens einige der Hohlräume, Vertiefungen und/oder Lochungen mit Gel gefüllt sind.

Eine solche Ausgestaltung kann beispielsweise zu besseren Schockabsorptionen hilfreich sein.

Bevorzugt ist zudem vorgesehen, dass die Einlage allseitig von den Kunststofffolien überragt ist und die Kunststofffolien im überragenden Bereich unmittelbar aufeinanderliegen und aufeinander laminiert sind.

Durch eine solche Ausgestaltung wird erreicht, dass auf mechanische Retentionen verzichtet werden kann, da ein fester mechanischer Halt erzeugt ist und eine Positionsveränderung ausgeschlossen werden kann.

Bei dem Endprodukt, also der Zahnschutzvorrichtung, ist die Einlage allseitig von den Kunststofffolien überragt. Diese Kunststofffolien sind (nur) in den überragenden Bereichen unmittelbar aufeinanderliegend miteinander verbunden, sodass hierdurch der Zusammenhalt und die Positionssicherung erreicht ist.

Zudem kann vorgesehen sein, dass die Einlage vorzugsweise quer zu ihrer Längserstreckung mindestens eine Sollbruchstelle aufweist.

Solche Zahnschutzvorrichtungen können Sollbruchstellen aufweisen, damit bei bestimmten Einsätzen, also bestimmten Sportarten, verschiedenen möglichen Verletzungsmustern Rechnung getragen werden kann. Ob und in wie fern und an welcher Stelle eine solche Ausgestaltung von Sollbruchstellen sinnvoll ist, ist im Einzelfall zu entscheiden. Wesentlich ist die Tatsache, dass in einfacher Weise solche Sollbruchstellen bei der Herstellung des Formteiles mittels 3-D-Drucker eingebracht werden können.

Auch kann vorgesehen sein, dass die Einlage aus radio-opakem Material besteht, insbesondere röntgen-opak ist.

Bei radio-opakem Material kann es sich beispielsweise um ein Bleigummimaterial handeln, welches aufgrund seiner Struktur im Gegensatz zu den eingesetzten Tiefziehfolien röntgen-opak ist, das heißt auf einem Röntgenbild sichtbar ist. Sofern ein Sportler unerwünschter Weise einen solchen Zahnschutz aspiriert, also im Extremfall verschluckt, so kann in einfacher Weise röntgenologisch der Sitz des Mundschutzes im Körper des Benutzers sichtbar gemacht werden, um eine Notoperation durchzuführen.

Ein besonderer Vorteil wird darin gesehen, dass die dem bezahnten Kiefer zu benachbarende erste Kunststofffolie eine der Form des Kiefers samt Zähnen angepasste Konturierung aufweist, dass die Einlage auf der der ersten Kunststofffolie zugewandten, an dieser anliegenden Seite die gleiche Konturierung aufweist und dass die zweite auf die Einlage aufgebrachte Kunststofffolie auf ihrer an dieser Einlage anliegenden Seite und an dem überstehenden Teil über die erste Kunststofffolie an dieser anliegenden Bereich der Form der Außenseite der Einlage und der Anlagefläche der ersten Kunststofffolie folgend flächig anliegt.

Durch die besondere Herstellungsweise der Zahnschutzvorrichtung im Wege des 3-D-Druckens ist es möglich, die Einlage auf der der ersten Kunststofffolie zugewandten Seite, die im Tiefziehvorgang die Konturierung des bezahnten Kiefers erhält, ebenfalls mit einer solchen Konturierung vorzusehen, sodass ein sicherer Passsitz zwischen der Einlage und der ersten Kunststofffolie erreicht wird. Dies ist mit herkömmlicher Technik schwer erreichbar.

Auch das Aufbringen der zweiten Kunststofffolie führt dazu, dass eine exakte Anpassung an die Einlage erfolgt, sodass insgesamt sowohl ein sicherer Sitz als auch eine vorzügliche Positionshalterung der Teile zueinander im Endzustand erreicht ist.

Zudem ist bevorzugt vorgesehen, dass die Kunststofffolien in den Bereichen, in denen sie unmittelbar aufeinanderliegen, fest miteinander verbunden sind und das Formteil zwischen den Kunststofffolien positioniert ist, aber ohne Bindung mit diesen geringfügig beweglich gehalten ist.

Gegenstand der Erfindung ist ferner ein Verfahren zur Herstellung einer Zahnschutzvorrichtung, insbesondere nach einem der Ansprüche 1 bis 15, wobei eine Hohlform eines bezahnten Kiefers mittels eines Abdruckes mit Hilfe einer Abdruckmasse geformt wird, die Hohlform mit einer gießfähigen, aushärtbaren Masse gefüllt und so ein Modell des bezahnten Kiefers angefertigt wird, welches vorzugsweise gehärtet, insbesondere lichtgehärtet wird, auf das Modell eine erste Tiefziehfolie aufgelegt, erwärmt und mittels Vakuum oder Überdruck auf das Modell aufgeformt wird, sodass die Konturen des bezahnten Kiefers ausgeformt werden.

Erfindungsgemäß ist zur Erzeugung einer entsprechenden Zahnschutzvorrichtung vorgesehen, dass von der Fläche der so umgeformten ersten Tiefziehfolie, die noch von dem Modell gehalten wird, mittels eines Scanners die Formdaten, in dem Bereich auf den eine Einlage aufgebracht werden soll, abgegriffen und in einem Datenerfasser/-speicher abgelegt werden, mittels der von dem Datenspeicher abgerufenen Daten und unter Hinzufügung der für die Einlage wesentlichen Daten, wie z.B. Materialstärke, mittels eines generativen Prozesses ein 3-D-Formteil mittels Drucker erzeugt wird, das so gefertigte 3-D-Formteil als Einlage auf die auf dem Modell befindliche tiefgezogene erste Tiefziehfolie aufgebracht wird, anschließend die zweite Tiefziehfolie auf die Einlage und den die Einlage in jeder Richtung überragenden Bereich der ersten Tiefziehfolie aufgelegt, erwärmt und mittels Vakuum oder Überdruck aufgeformt wird, nachfolgend vorzugsweise eine Abkühlung vorgenommen wird und dann die fertige Zahnschutzvorrichtung von dem Modell abgenommen wird, wobei die Einlage eine seitliche Erstreckung hat, die mehr als einer Breite von sechs Zähnen entspricht, vorzugsweise bis zu 10 Zähnen, ganz bevorzugt der Gesamtlänge eines bezahnten Kiefers eines Benutzers, und die Schichtstärke der Einlage zwischen 0,5 mm und 5 mm beträgt.

In herkömmlicher Weise wird zunächst eine Hohlform eines bezahnten Kiefers mittels eines Abdruckes und mit Hilfe einer Abdruckmasse hergestellt. Diese Hohlform wird dann zur Herstellung eines Modelles des bezahnten Kiefers benutzt. Auf dieses Modell wird dann die erste Tiefziehfolie aufgelegt, erwärmt und mittels vorzugsweise Vakuum auf das Modell aufgeformt, sodass dessen Konturen abgebildet sind. Von der Fläche der so umgeformten ersten Tiefziehfolie, die noch von dem Modell gehalten wird, wird beispielsweise eines Scanners die Form erfasst und die Formdaten werden insbesondere in dem Bereich, auf den eine Einlage aufgebracht werden soll, abgenommen und in einen Datenerfasserspeicher übertragen und abgelegt. Mittels der von dem Datenspeicher abrufbaren Daten können unter Hinzufügung weiterer für das Produkt wesentlicher Daten, wie zum Beispiel die Materialstärke, mittels eines generativen Prozesses 3-D-Formteile mittels des Druckers erzeugt werden. Ein so gefertigtes 3-D-Formteil bildet die Einlage, die auf die noch im Modell befindliche tiefgezogene erste Tiefziehfolie aufgebracht wird. Die Lagepositionierung in der richtigen Position ist dadurch vereinfacht, dass die Einlage auf der Seite, die der ersten Tiefziehfolie zugewandt ist, entsprechend konturiert ist, sodass der richtige Sitz durch die passende Zusammenlegung der Konturen erreicht wird. Anschließend kann die zweite Tiefziehfolie auf die Einlage und den die Einlage in jeder Richtung überragenden Bereich der ersten Tiefziehfolie aufgelegt, erwärmt und aufgeformt werden. Nachfolgend kann eine Abkühlung vorgenommen werden oder es kann auch eine Abkühlung durch Luft erfolgen. Sobald eine ausreichend Abkühlung erfolgt ist, kann die fertige Zahnschutzvorrichtung von dem Modell abgenommen werden und steht zur Benutzung zur Verfügung.

Vorzugsweise wird als Medium für das Aufformen im Wege des Tiefziehens Luft verwendet.

Bevorzugt ist vorgesehen, dass die erste Tiefziehfolie mit der zweiten Tiefziehfolie in den Bereichen, in denen die beiden Folien aufeinander liegen mittels des Vakuums oder des Überdrucks fest und unlösbar miteinander verbunden werden, insbesondere laminiert werden, während das Material der Tiefziehfolien keine Bindung mit dem Material der Einlage eingeht.

Die Wirkung dieser Verfahrensweise ist schon hinsichtlich der Merkmale der Zahnschutzvorrichtung angegeben worden.

Ein schematisches Ausführungsbeispiel der Erfindung ist in der Zeichnung dargestellt und im Folgenden näher beschrieben.

Es zeigt:
- Fig. 1: eine komplette Zahnschutzvorrichtung in Ansicht;
- Fig. 2: eine Explosionsdarstellung von Teilen der erfindungsgemäßen Zahnschutzvorrichtung;
- Fig. 3: eine Einzelheit der Zahnschutzvorrichtung in Ansicht;

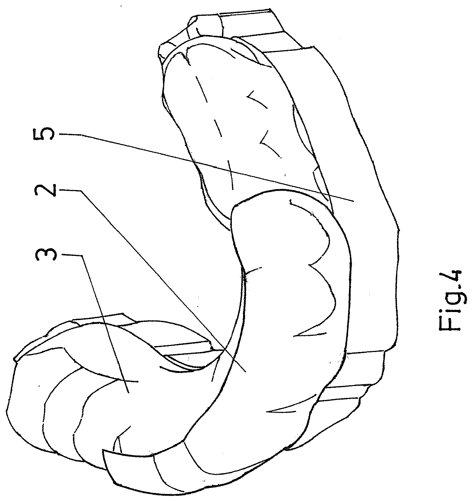

- Fig. 4: eine Ansicht, bei der die Teile gemäß Figur 2 aufeinandergefügt sind.

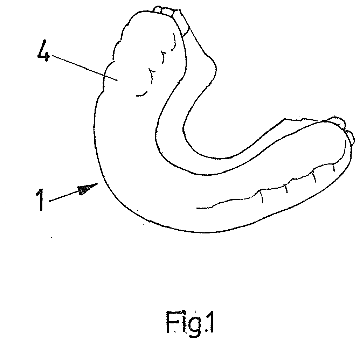

In der Figur 1 ist eine komplette Zahnschutzvorrichtung 1 gezeigt. Sie besteht aus einer einem bezahnten Kiefer eines Benutzers angepassten, im Querschnitt etwa U-förmigen Schiene aus tiefziehfähigem Kunststoff, insbesondere EVA. Die Schiene weist zwei aufeinander laminierte Kunststofffolien mit dazwischen befindlicher Einlage 2 auf. Die Einlage 2 weist eine Länge auf, die mehreren Zähnen des bezahnten Kiefers entspricht und ist vorzugweise in einem dem Gaumen des Benutzers abgewandten mittleren Frontbereich des bezahnten Kiefers vorgesehen. Die Breite entspricht etwa der Höhe der Zähne bis zum Zahnfleisch.

Bei der Einlage 2 handelt es sich um ein mittels eines 3-D-Druckers erzeugtes Formteil aus licht- oder laserhärtendem Kunststoff. Eine solche Einlage 2 kann durchgängig aus gleichem Material und gleicher Härte bestehen. Sie kann aber auch aus Material unterschiedlicher Härte bestehen, sodass beispielsweise im Mittelbereich der Einlage eine höhere Härte als in den Endbereichen der Einlage 2 vorliegt. Die Schichtstärke der Einlage 2 kann beispielsweise zwischen 0,5 mm und 5 mm betragen und über deren Längs- und Höhenerstreckung variieren. Bei der fertigen Zahnschutzvorrichtung gemäß Figur 1 ist die dort nicht mehr sichtbare Einlage 2 allseitig von den Kunststofffolien überragt, wobei die Kunststofffolien in dem überragenden Bereich unmittelbar aufeinander liegen und aufeinander laminiert sind, sodass ein sicherer und fester Sitz und eine sichere Verbindung der Teile miteinander erreicht ist.

Die dem bezahnten Kiefer zunächst liegende erste Kunststofffolie 3 weist eine der Form des Kiefers samt Zähnen angepasste Konturierung auf. Die Einlage 2 weist auf ihrer der ersten Kunststofffolie 3 zugewandten und an dieser anliegenden Seite die gleiche Konturierung auf. Die zweite auf die Einlage 2 aufgebrachte Kunststofffolie 4 weist auf ihrer an der Einlage 2 anliegenden und im überstehenden Bereich an der ersten Kunststofffolie 3 anliegende Seite entsprechend angepasste Formen auf, die durch den Tiefziehvorgang erzeugt werden. Es wird damit eine flächige, satte Anlage der Teile aneinander erreicht und sichergestellt. Die Kunststofffolien 1,3 sind in dem Bereich, in denen sie unmittelbar aufeinander liegen, fest miteinander verbunden. Das Formteil 2, welches zwischen den Kunststofffolien 3,4 positioniert ist, aber ohne Bindung mit diesem angeordnet ist, wird allseitig von den Kunststofffolien 3,4 überragt.

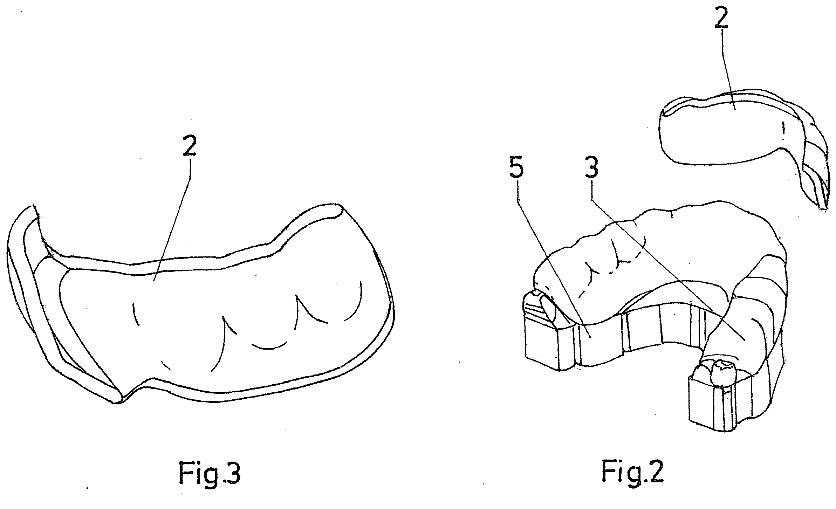

Zur Herstellung einer solchen Zahnschutzvorrichtung 1 wird zunächst die Hohlform eines bezahnten Kiefers mittels eines Abdruckes mit Hilfe einer Abdruckmasse geformt. Diese Hohlform wird mit einer gießfähigen aushärtbaren Masse befüllt und so ein Modell 5 des bezahnten Kiefers angefertigt. Beim Herstellungsvorgang wird auf das Modell 5 die erste Tiefziehfolie 3 aufgelegt, erwärmt und mittels vorzugsweise Vakuum auf das Modell aufgeformt, wie in Figur 2 unterer Bereich gezeigt. Dabei werden die Konturen des bezahnten Kiefers in der Folie aufgeformt. Von der Fläche der so umgeformten ersten Tiefziehfolie 3, die vorzugsweise noch von dem Modell 5 gehalten wird, wird mittels eines Scanners die Form und dergleichen wesentliche Daten erfasst und in einen Datenspeicher übertragen. Im Datenspeicher werden weitere Daten hinzugefügt, beispielsweise über die Dicke der Einlage. Mittels eines generativen Prozesses wird das Formteil 2 mittels eines 3-D-Druckers erzeugt in den die Daten zum Zwecke der Herstellung eingelesen und verarbeitet werden. Das so gefertigte 3-D-Formteil 2 wird als Einlage 2 auf die auf dem Modell 5 befindliche erste Tiefziehfolie 3 aufgesetzt. Anschließend wird die zweite Tiefziehfolie 4 auf die Einlage 2 und den die Einlage 2 in jeder Richtung überragenden Bereich der ersten Tiefziehfolie 3 aufgelegt, erwärmt und mittels vorzugsweise Vakuum aufgeformt. Hierdurch wird ein Produkt erzeugt, wie es in Figur 1 gezeigt ist.

Die Erfindung ist nicht auf das Ausführungsbeispiel beschränkt, sondern im Rahmen der Offenbarung vielfach variabel.

## Patentansprüche

1. Zahnschutzvorrichtung (1), bestehend aus einer einem bezahnten Kiefer eines Benutzers angepassten, im Querschnitt etwa U-förmigen oder rinnenförmigen Schiene aus tiefziehfähigem Kunststoff, vorzugsweise aus Ethylenvinylacetat (EVA), wobei die Schiene zwei aufeinander laminierte Kunststofffolien (3,4) mit dazwischen befindlicher Einlage (2) aufweist, die vornehmlich in einem dem Gaumen des Benutzers abgewandten mittleren Frontbereich vorgesehen ist und eine seitliche Erstreckung aufweist, die mehreren Zähnen des Benutzers entspricht sowie eine Breite aufweist, die von einem etwas überdeckbaren Zahnspitzenbereich bis zum Zahnfleisch entspricht, **dadurch gekennzeichnet, dass** die Einlage (2) ein mittels eines 3-D-Druckers erzeugtes 3-D-Formteil aus licht- oder laserhärtendem Kunststoff ist, wobei die Schichtdicke des Formteils variiert, und dass die Einlage (2) eine seitliche Erstreckung hat, die mehr aus einer Breite von sechs Zähnen entspricht, vorzugsweise bis zu 10 Zähnen, ganz bevorzugt der Gesamtlänge eines bezahnten Kiefers eines Benutzers, und dass die Schichtstärke der Einlage (2) zwischen 0,5 mm und 5 mm beträgt.

2. Vorrichtung nach Anspruch 1, **dadurch gekennzeichnet, dass** die Einlage (2) ein Formteil aus Acrylaten, Methacrylaten, Epoxiden, Vinylethern, Vinylestern,Styrolderivaten, Thiol-En-Systemen oder Mischungen davon ist.

3. Vorrichtung nach Anspruch 1 oder 2, **dadurch gekennzeichnet, dass** das Formteil Farbstoffe beinhaltet.

4. Vorrichtung nach einem der Ansprüche 1 bis 3, **dadurch gekennzeichnet, dass** die Kunststofffolien (3,4) aus klarsichtigem Material besteht.

5. Vorrichtung nach einem der Ansprüche 1 bis 4, **dadurch gekennzeichnet, dass** die Einlage (2) aus Material mit unterschiedlicher Härte besteht.

6. Vorrichtung nach Anspruch 5, **dadurch gekennzeichnet, dass** die Einlage (2) aus Material einer Härte von zwischen 35 und 90 Shore A besteht.

7. Vorrichtung nach einem der Ansprüche 1 bis 6, **dadurch gekennzeichnet, dass** die Kunststofffolien (3,4) zumindest teilweise opak sind.

8. Vorrichtung nach einem der Ansprüche 1 bis 7, **dadurch gekennzeichnet, dass** die Einlage (2) Hohlräume, Vertiefungen und/oder Lochungen aufweist.

9. Vorrichtung nach Anspruch 8, **dadurch gekennzeichnet, dass** die Hohlräume, Vertiefungen und/oder Lochungen nicht vom Material der Kunststofffolien (3,4) gefüllt sind.

10. Vorrichtung nach Anspruch 8 oder 9, **dadurch gekennzeichnet, dass** mindestens einige der Hohlräume, Vertiefungen und/oder Lochungen mit Gel gefüllt sind.

11. Vorrichtung nach einem der Ansprüche 1 bis 10, **dadurch gekennzeichnet, dass** die Einlage (2) allseitig von den Kunststofffolien (3,4) überragt ist und die Kunststofffolien (3,4) im überragenden Bereich unmittelbar aufeinanderliegen und aufeinander laminiert sind.

12. Vorrichtung nach einem der Ansprüche 1 bis 11, **dadurch gekennzeichnet, dass** die Einlage (2) vorzugsweise quer zu ihrer Längserstreckung mindestens eine Sollbruchstelle aufweist.

13. Vorrichtung nach einem der Ansprüche 1 bis 12, **dadurch gekennzeichnet, dass** die Einlage (2) aus radio-opakem Material besteht, insbesondere röntgen-opak ist.

14. Vorrichtung nach einem der Ansprüche 1 bis 13, **dadurch gekennzeichnet, dass** die dem bezahnten Kiefer zu benachbarende erste Kunststofffolie (3) eine der Form des Kiefers samt Zähnen angepasste Konturierung aufweist, dass die Einlage (2) auf der der ersten Kunststofffolie (3) zugewandten, an dieser anliegenden Seite die gleiche Konturierung aufweist und dass die zweite auf die Einlage (2) aufgebrachte Kunststofffolie (4) auf ihrer an dieser Einlage (2) anliegenden Seite und an dem überstehenden Teil über die erste Kunststofffolie (3) an dieser anliegenden Bereich der Form der Außenseite der Einlage (2) und der Anlagefläche der ersten Kunststofffolie (3) folgend flächig anliegt.

15. Vorrichtung nach einem der Ansprüche 1 bis 14, **dadurch gekennzeichnet, dass** die Kunststofffolien (3,4) in den Bereichen, in denen sie unmittelbar aufeinander liegen, fest miteinander verbunden sind und das Formteil (2) zwischen den Kunststofffolien (3,4) positioniert ist, aber ohne Bindung mit diesen geringfügig beweglich gehalten ist.

16. Verfahren zur Herstellung einer Zahnschutzvorrichtung (1), insbesondere nach einem der Ansprüche 1 bis 15, wobei eine Hohlform eines bezahnten Kiefers mittels eines Abdruckes mit Hilfe einer Abdruckmasse geformt wird, die Hohlform mit einer gießfähigen, aushärtbaren Masse gefüllt und so ein Modell (5) des bezahnten Kiefers angefertigt wird, auf das Modell (5) eine erste Tiefziehfolie (3) aufgelegt, erwärmt und mittels Vakuum oder Überdruck auf das Modell (5) aufgeformt wird, sodass die Konturen des bezahnten Kiefers ausgeformt werden, **dadurch gekennzeichnet, dass** von der Fläche der so umgeformten ersten Tiefziehfolie (3), die vorzugsweise noch von dem Modell (5) gehalten wird, mittels eines Scanners die Formdaten, in dem Bereich auf den eine Einlage (2) aufgebracht werden soll, abgegriffen und in einem Datenerfasser/- speicher abgelegt werden, mittels der von dem Datenspeicher abgerufenen Daten und unter Hinzufügung der für die Einlage (2) wesentlichen Daten, wie z.B. Materialstärke, mittels eines generativen Prozesses ein 3-D-Formteil mittels Drucker erzeugt wird, das so gefertigte 3-D-Formteil als Einlage (2) auf die auf dem Modell (5) befindliche tiefgezogene erste Tiefziehfolie (3) aufgebracht wird, anschließend die zweite Tiefziehfolie (4) auf die Einlage (2) und den die Einlage (2) in jeder Richtung überragenden Bereich der ersten Tiefziehfolie (3) aufgelegt, erwärmt und mittels Vakuum oder Überdruck aufgeformt wird, nachfolgend vorzugsweise eine Abkühlung vorgenommen wird und dann die fertige Zahnschutzvorrichtung (1) von dem Modell abgenommen wird, wobei die Einlage (2) eine seitliche Erstreckung hat, die mehr als einer Breite von sechs Zähnen entspricht, vorzugsweise bis zu 10 Zähnen, ganz bevorzugt der Gesamtlänge eines bezahnten Kiefers eines Benutzers, und die Schichtstärke der Einlage (2) zwischen 0,5 mm und 5 mm beträgt.

17. Verfahren nach Anspruch 16, **dadurch gekennzeichnet, dass** als Medium für das Aufformen mittels Vakuum oder Überdruck Luft verwendet wird.

18. Verfahren nach einem der Ansprüche 16 oder 17, **dadurch gekennzeichnet, dass** die erste Tiefziehfolie (3) mit der zweiten Tiefziehfolie (4) in den Bereichen, in denen die beiden Folien aufeinander liegen mittels des Vakuums oder des Überdrucks fest und unlösbar miteinander verbunden werden, insbesondere laminiert werden, während das Material der Tiefziehfolien keine Bindung mit dem Material der Einlage (2) eingeht.

## Claims

1. A tooth protection device (1), comprising a rail adapted to the toothed jaw of a user, having an approximately U-shaped or trough-shaped cross-section and being made of a deep-drawable plastic material, preferably of ethylene-vinyl acetate (EVA), the rail including two plastic films (3, 4) laminated on top of each other with an interposed insert (2) that is provided mainly in a central frontal part facing away from the palate of the user and has a lateral extension corresponding to a plurality of teeth of the user and has a width extending from a slightly coverable tooth tip region up to the gums, **characterized by that** the insert (2) is a 3-D shaped part made of a light or laser-hardening plastic material produced by means of a 3-D printer, the layer thickness of the shaped part varying, and that the insert (2) has a lateral extension corresponding to more than a width of six teeth, preferably up to 10 teeth, most preferably to the total length of a toothed jaw of a user, and that the layer thickness of the insert (2) is between 0.5 mm and 5 mm.

2. The device according to claim 1, **characterized by that** the insert (2) is a shaped part made of acrylates, methacrylates, epoxides, vinyl ethers, vinyl esters, styrene derivatives, thiol-en systems or mixtures thereof.

3. The device according to claim 1 or 2, **characterized by that** the shaped part includes colorants.

4. The device according to one of claims 1 to 3, **characterized by that** the plastic films (3, 4) are made of a transparent material.

5. The device according to one of claims 1 to 4, **characterized by that** the insert (2) is made of a material with different hardness.

6. The device according to claim 5, **characterized by that** the insert (2) is made of a material with a hardness between 35 and 90 shore A.

7. The device according to one of claims 1 to 6, **characterized by that** the plastic films (3, 4) are at least in part opaque.

8. The device according to one of claims 1 to 7, **characterized by that** the insert (2) includes cavities, depressions, and/or holes.

9. The device according to claim 8, **characterized by that** the cavities, depressions, and/or holes are not filled with the material of the plastic films (3, 4).

10. The device according to claim 8 or 9, **characterized by that** at least some of the cavities, depressions, and/or holes are filled with gel.

11. The device according to one of claims 1 to 10, **characterized by that** the plastic films (3, 4) protrude on all sides beyond the insert (2), and the plastic films (3, 4) are arranged in the protruding region immediately on top of each other and are laminated on top of each other.

12. The device according to one of claims 1 to 11, **characterized by that** the insert (2) includes, preferably transversely to its longitudinal extension, at least one predetermined breaking point.

13. The device according to one of claims 1 to 12, **characterized by that** the insert (2) is made of a radio-opaque material, in particular X-ray opaque.

14. The device according to one of claims 1 to 13, **characterized by that** the first plastic film (3) to be neighbored to the toothed jaw has a contour adapted to the shape of the jaw together with teeth, that the insert (2) has, on the side facing toward the first plastic film (3) and abutting the latter, the same contour, and that the second plastic film (4) applied onto the insert (2), on its side abutting this insert (2) and at the portion protruding beyond the first plastic film (3), abuts in a planar configuration, following the shape of the outside of the insert (2) and the abutting face of the first plastic film (3).

15. The device according to one of claims 1 to 14, **characterized by that** the plastic films (3, 4) are, in the regions where they are arranged immediately on top of each other, firmly interconnected, and the shaped part (2) is positioned between the plastic films (3, 4), but is held slightly movably with them without binding.

16. A method for making a tooth protection device (1), in particular according to one of claims 1 to 15, wherein a hollow mold of a toothed jaw is formed by means of an impression with the aid of a modeling compound, the hollow mold is filled with a moldable, curable compound and thus a model (5) of the toothed jaw is prepared, onto the model (5) a first deep-draw film (3) is placed, heated and formed by means of vacuum or overpressure onto the model (5), so that the contours of the toothed jaw are reproduced, **characterized by that** from the surface of the thus reshaped first deep-draw film (3) that is preferably still held by the model (5), the shape data in the region where an insert (2) is to be applied, are taken by means of a scanner and stored in a data acquisition memory, by means of the data retrieved from the data memory and under addition of data being essential for the insert (2), such as material thickness, by means of a generative process, a 3-D shaped part is produced by means of a printer, the thus produced 3-D shaped part is positioned as an insert (2) onto the first deep-draw film (3) located on the model (5), thereafter the second deep-draw film (4) is positioned onto the insert (2) and onto the region of the first deep-draw film (3) protruding in every direction beyond the insert (2), is heated and formed by means of vacuum or overpressure, subsequently preferably a cooling-down process is performed and then the completed tooth protection device (1) is removed from the model, wherein the insert (2) has a lateral extension corresponding to more than a width of six teeth, preferably 10 teeth, most preferably to the total length of a toothed jaw of a user, and the layer thickness of the insert (2) is between 0.5 mm and 5 mm.

17. The method according to claim 16, **characterized by that** air is used as a medium for shaping by means of vacuum or overpressure.

18. The method according to one of claims 16 or 17, **characterized by that** the first deep-draw film (3) and the second deep-draw film (4), in the regions where the two films are arranged on top of each other, are connected firmly and undetachably by means of the vacuum or of the overpressure, in particular are laminated, whereas the material of the deep-draw films is not bound to the material of the insert (2).

## Revendications

1. Dispositif de protection dentaire (1), comprenant un rail adapté à la mâchoire dentée d'un utilisateur, ayant une section environ en forme d'U ou de gouttière et étant en un matériau plastique emboutissable, de préférence d'éthylène-acétate de vinyle (EVA), le rail comportant deux feuilles plastiques (3, 4) laminées l'une sur l'autre avec un insert (2) intermédiaire qui est prévu essentiellement dans une partie avant central à l'opposé du palais de l'utilisateur et a une étendue latérale correspondant à plusieurs dents de l'utilisateur et a une largeur s'étendant à partir de la zone de la pointe du dent légèrement recouvrable jusqu'à la gencive, **caractérisé en ce que** l'insert (2) est une pièce de formage en 3D en un matériau plastique durcissant par lumière ou laser produite au moyen d'une imprimante 3D, l'épaisseur des couches de la pièce de formage étant variable, et que l'insert (2) a une étendue latérale correspondant à plus d'une largeur de six dents, de préférence jusqu'à 10 dents, de préférence la plus grande à la longueur totale d'une mâchoire dentée d'un utilisateur, et que l'épaisseur de la couche de l'insert (2) est comprise entre 0,5 mm et 5 mm.

2. Dispositif selon la revendication 1, **caractérisé en ce que** l'insert (2) est une pièce de formage en des acrylates, méthacrylates, époxides, éthers vinyliques, esters vinyliques, dérivés de styrène, systèmes thiol-en ou mélanges de ceux-ci.

3. Dispositif selon la revendication 1 ou 2, **caractérisé en ce que** la pièce de formage comporte des colorants.

4. Dispositif selon une des revendications 1 à 3, **caractérisé en ce que** les feuilles plastiques (3, 4) sont en un matériau transparent.

5. Dispositif selon une des revendications 1 à 4, **caractérisé en ce que** l'insert (2) est en un matériau de dureté différente.

6. Dispositif selon la revendication 5, **caractérisé en ce que** l'insert (2) est en un matériau d'une dureté entre 35 et 90 Shore A.

7. Dispositif selon une des revendications 1 à 6, **caractérisé en ce que** les feuilles plastiques (3, 4) sont au moins partiellement opaques.

8. Dispositif selon une des revendications 1 à 7, **caractérisé en ce que** l'insert (2) comporte des cavités, retraits, et/ou trous.

9. Dispositif selon la revendication 8, **caractérisé en ce que** les cavités, retraits, et/ou trous ne sont pas chargés du matériau des feuilles plastiques (3, 4).

10. Dispositif selon la revendication 8 ou 9, **caractérisé en ce qu'**au moins quelques-uns des cavités, retraits, et/ou trous sont chargés de gel.

11. Dispositif selon une des revendications 1 à 10, **caractérisé en ce que** les feuilles plastiques (3, 4) font saillie sur toutes les faces au-delà de l'insert (2), et les feuilles plastiques (3, 4) se trouvent dans la zone faisant saillie immédiatement l'une sur l'autre et sont laminées l'une sur l'autre.

12. Dispositif selon une des revendications 1 à 11, **caractérisé en ce que** l'insert (2) comporte, de préférence transversalement à son étendue longitudinale, au moins une zone d'amorce de rupture.

13. Dispositif selon une des revendications 1 à 12, **caractérisé en ce que** l'insert (2) est en un matériau radio-opaque, en particulier opaque aux rayons X.

14. Dispositif selon une des revendications 1 à 13, **caractérisé en ce que** la première feuille plastique (3) à être voisine à la mâchoire dentée a un contour adapté à la forme de la mâchoire ensemble avec les dents, que l'insert (2) a, du côté de la première feuille plastique (3) et étant en appui sur celle-ci, le même contour, et que la deuxième feuille plastique (4) appliquée sur l'insert (2), sur son côté étant en appui sur l'insert (2) et à la partie faisant saillie au-delà de la première feuille plastique (3), est en appui plan, suivant la forme de l'extérieur de l'insert (2) et la face d'appui de la première feuille plastique (3).

15. Dispositif selon une des revendications 1 à 14, **caractérisé en ce que** les feuilles plastiques (3, 4) sont, dans les zones où elles se trouvent immédiatement l'une sur l'autre, rigidement liées entre elles, et la pièce de formage (2) est positionnée entre les feuilles plastiques (3, 4), mais est montée légèrement mobile sans liage à celles-ci .

16. Procédé de fabrication d'un dispositif de protection dentaire (1), en particulier selon une des revendications 1 à 15, dans lequel une moule creuse d'une mâchoire dentée est réalisée au moyen d'une impression à l'aide d'une matière d'empreinte, la moule creuse est chargée d'une matière apte à être moulée, durcissable et donc un modèle (5) de la mâchoire dentée est réalisé, une première feuille d'emboutissage (3) est positionnée sur le modèle (5), chauffée et formée au moyen de vacuum ou surpression sur le modèle (5), de façon que les contours de la mâchoire dentée soient reproduits, **caractérisé en ce que** de la surface de la première feuille d'emboutissage (3) ainsi mise en forme, qui de préférence est encore retenue par le modèle (5), les données de la forme dans la zone où un insert (2) est à appliqué, sont prises au moyen d'un scanner et enregistrées dans une mémoire d'acquisition de données, au moyen des données récupérées de la mémoire de données et sous addition de données étant essentielles pour l'insert (2), comme p. ex. l'épaisseur du matériau, au moyen d'un procédé génératif, une pièce de formage en 3D est produite au moyen d'une imprimante, la pièce de formage en 3D ainsi produite est positionnée comme l'insert (2) sur la première feuille d'emboutissage (3) qui se trouve sur le modèle (5), après la deuxième feuille d'emboutissage (4) est positionnée sur l'insert (2) et sur la zone de la première feuille d'emboutissage (3) faisant saillie en tout sens au-delà de l'insert (2), chauffée et formée au moyen de vacuum ou surpression, ensuite de préférence un refroidissement est exécuté et puis le dispositif de protection dentaire (1) fini est enlevé du modèle, dans lequel l'insert (2) a une étendue latérale correspondant à plus d'une largeur de six dents, de préférence 10 dents, de préférence la plus haute à la longueur totale d'une mâchoire dentée d'un utilisateur, et l'épaisseur de la couche de l'insert (2) est comprise entre 0,5 mm et 5 mm.

17. Procédé selon la revendication 16, **caractérisé en ce que** de l'air est utilisée comme milieu pour former au moyen de vacuum ou surpression.

18. Procédé selon une des revendications 16 ou 17, **caractérisé en ce que** la première feuille d'emboutissage (3) et la deuxième feuille d'emboutissage (4), dans les zones où les deux feuilles se trouvent l'une sur l'autre, sont liées rigidement et de manière non amovible au moyen du vacuum ou de la surpression, en particulier sont laminées, alors que le matériau des feuilles d'emboutissage n'est pas lié au matériau de l'insert (2).
